# EUROPEAN PATENT APPLICATION

(11) **EP 1 760 439 A2**
(43) Date of publication of application: **07.03.2007**
(21) Application number: 06119090.6
(22) Date of filing: 17.08.2006
(51) Int. Cl.: G01F 23/00

(54) **Fluid monitoring system**

(30) Priority: 31.08.2005 AU 2005904772
(71) Applicant: Liquip International Pty Limited, Sydney, NSW 2000 (AU)
(72) Inventor: LAPINSKI, Miroslaw, Sydney, New South Wales 2000 (AU); GREGORY, David c/o Liquip Int. Pty Ltd., Sydney, New South Wales 2000 (AU)
(74) Representative: Nielsen, Kim Garsdal

(57) **Abstract**

Systems and methods for monitoring fluid in a transportation tank comprising at least one tank sensor (2,4,6) to take measurements indicative of the volume of fluid in the tank (8,10,12) and means to determine at least one of a location of the tank and the time at the location (26).

## Description

### Technical Field

This invention relates generally to a system for monitoring the volume of liquid in a transportation tank.

### Background to the Invention

The ever increasing value of petro-chemical liquids has focussed attention on increasing security measures to reduce theft or substitution from tanks and containers storing these liquids. Tanks and containers are found in fixed installations such as tank farms and service stations; they are also found in mobile installations in the form of transportation tanks in vehicles such as road and rail tankers.

Security within tank farms and service stations is relatively easy to ensure, as the tanks are typically fixed in position and can be monitored using cameras readily installed and monitored by on-site employees.

Monitoring the fuel loads of transportation tanks during transit, however, is not as simple. Theft of fuel can easily go unnoticed when the vehicle is left unmanned, and the receiving site may often be left unattended such that the contents of the tank cannot readily be measured. Moreover, even where the post and pre trip fluid levels correspond, it is not possible to determine whether the load had been substituted during transport for a cheaper low-grade product of the expensive product initially loaded. It is common for such vehicles to make several such trips in one day, whereby the driver of the vehicle is the sole and unsupervised operator.

### Summary of the Invention

In a first aspect the present invention provides a fluid monitoring system for a transportation tank, the system comprising: at least one tank sensor to take measurements indicative of the volume of fluid in the tank; and means to determine at least one of a location of the tank and a time at the location.

The system may comprise a control unit arranged to monitor the tank sensor measurements and the at least one of the location and time, and output a tank output data.

The system may also comprise a transmitter means to communicate the tank output data over a communications network to a control centre.

The system may also comprise a tank access means arranged to control access to the tank based on the tank output data.

The means to determine time and location may be provided in the form of a GPS receiver.

The system may also comprise an electronic storage device to record one or more of the tank sensor measurements, location and time.

The system may also comprise a temperature compensation means arranged to adjust the tank sensor measurements in response to fluid temperature variations measured inside the tank.

In a second aspect the present invention provides a method for monitoring fluids in a transportation tank, the method comprising the steps of: taking measurements indicative of the volume of fluid in the tank; and measuring at least one of a location of the tank and time.

The method may further comprise the step of communicating the measurements indicative of the fluid volume and the at least one of a location of the tank and time to a control centre over a communications network.

The method may also comprise the step of controlling access to the tank based on at least one of the tank sensor measurements, location and/or time.

In a third aspect the present invention provides an apparatus for controlling access to tank valves in a transportation tank, the apparatus comprising: a memory arranged to store data indicative of allowable delivery routes and/or destinations; means to measure at least one of a location of the tank and time; and control means to control access to the tank valves based on the at least one tank location and time and the data.

In a fourth aspect the present invention provides a method for controlling access to tank valves in a transportation tank, the method comprising the steps of: taking measurements indicative of at least one of a location of the tank and a time; comparing the at least one of a tank location and time with an allowable delivery route and/or destination, and controlling access to the tank valves based on the result of the comparison.

In a fifth aspect the present invention provides a fluid monitoring system for a transportation tank, the system comprising: at least one tank sensor to take measurements indicative of the volume of fluid in the tank; and transmitter means to communicate the measurements to a control centre over a communications network.

In a sixth aspect the present invention provides a method for monitoring fluids in a transport tank, the method comprising the steps of: taking measurements indicative of the volume of fluid in the tank; and communicating the measurements over a communications network to a remote centre.

### Brief Description of the Drawings

An embodiment of the present invention will now be described, by way of example only, with reference to the accompanying drawings, in which:
Figure 1 is a schematic view of a transport tanker fitted with a fluid level monitoring system according to an embodiment of the present invention.
Figure 2 is a schematic view showing a system for reporting fluid level measurements of a transportation tank back to a control centre according to an embodiment of the present invention.

### Detailed Description of the Preferred Embodiment

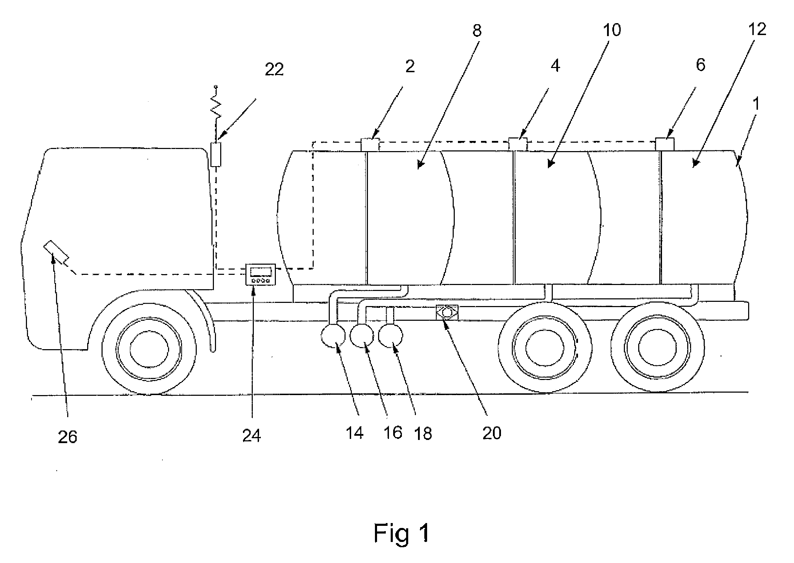

Referring to Fig. 1, there is shown a road transport tanker 1 having a plurality of tank sensors in the form of fluid level sensors 2,4,6 arranged to take measurements indicative of the volume of liquid in each of the sub-tanks 8,10,12. Each sub-tank is provided with a filling and discharge valve 14,16,18. The transport tanker 1 also provides a locating and timing means in the form of a GPS receiver 26 to record instantaneous measurements of the tanker's location, time, direction of travel and speed. In combination, the fluid level measurements and GPS output provide a real time indication of the tanker's payload at any particular time and location.
Control unit 24 is programmable to receive the measurements from fluid level sensors 2,4,6 and output an encoded tank output data representative of the volume of fluid in sub-tanks 8,10,12. Where instructed, the controller may additionally encode any of the other abovementioned outputs in the tank output data.

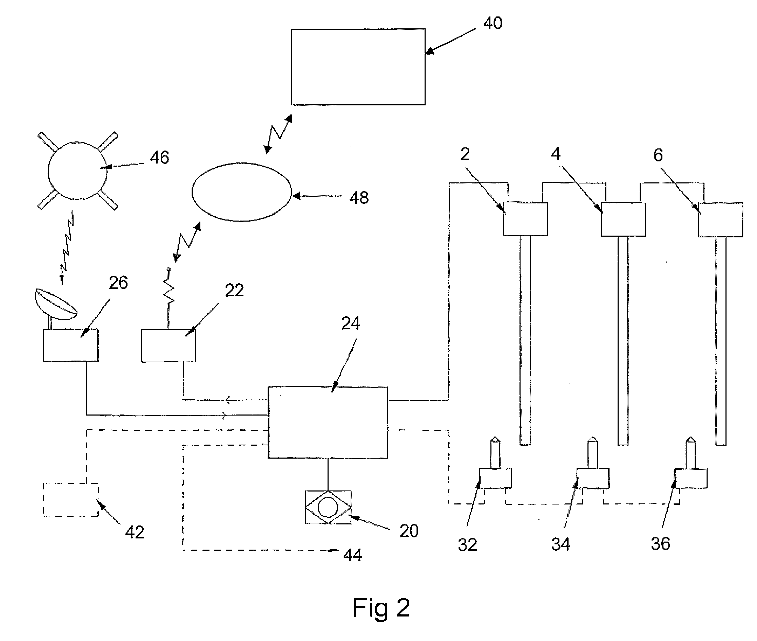

With reference to Fig. 2, a system for reporting tank output data to a control centre 40 is shown. In this embodiment, tank sensors 2,4,6; GPS receiver 26; radio transmitter 22; reserve power supply 42; optional control output 44; and overfill protection connection 20, are all linked to the control unit 24. GPS satellite system is illustrated by 46. In response to an interrogation signal, or according to a pre-set timing schedule, the control unit 24 is instructed to communicate the tank output data to the control centre 40 over communications network 48. The tank output data is sent using radio transmitter 22. The tank output data is used by the control centre 40 to monitor unauthorised fuel deliveries and establish suitable audit trails for each of the transport tankers equipped with transceiver means 22.
Control unit 24 also comprises an electronic programmable memory (not shown) having stored thereon a set of allowable delivery routes and destination points. Tank valves 14, 16 & 18 are only accessible by firstly raising a bar (not shown) which blocks access to the valves in a known. Movement of the bar is selectively permitted by control unit 24. The control unit 24 shuts off access to tank valves 14,16,18 by restricting removal or movement of the bar until the control unit 24 detects that the tanker 1 has arrived at an allowed destination point. Thus, the control unit 24 establishes an access control scheme to effectively ensure that the tanker's payload cannot be tampered with while en-route to an anticipated destination. In an alternate embodiment, the control unit 24 is arranged to control access to the tanker's payload in response to an instruction received from the control centre 40.
The control unit 24 is programmed to recognise a new delivery in response to a notification that the overfill protection system 20 has been disconnected. This condition signifies that the levels measured in each sub-tank by sensors 2,4,6 are the true levels which are to be monitored during transit.
Temperature compensation means is provided in the form of temperature probes 32,34,36 installed in each sub-tank 8,10,12 to compensate for the change in liquid volume in different temperatures. The probes measure the temperatures of the fluids in each sub-tank 8,10,12. Data output from each of the probes 32,34,36 is fed back to the control unit 24 to allow for adjustment of measurements due to variations in fluid temperature.
In the above described embodiment the tank sensors were arranged to measure the fluid levels in the tanks of interest, however as can readily be appreciated, any form of sensor capable of taking measurements indicative of the volume of fluid in a tank would be equally capable of performing the claimed invention.

It can be appreciated that the above described system would be equally suited to any form of transportation tank, including but not limited to, road tankers, rail tankers, and water going tankers. Similarly, the liquid being transported is not limited to petrochemicals, but could include other liquids such as liquid fertiliser bio-waste or other effluent.
Although the location measurements of the above described embodiment were performed using a GPS receiver, the tanker location could equally be measured using any known form of locating means, including but not limited to, GSM (Global System for Mobile Communications) base station locating techniques, UMTS (Universal Mobile Telecommunications System) location techniques, and the like.

Any reference to prior art contained herein is not to be taken as an admission that the information is common general knowledge, unless otherwise indicated.
Finally, it is to be appreciated that various alterations or additions may be made to the parts previously described without departing from the spirit or ambit of the present invention.

The invention that may be claimed is described in the following novel arrangements, either singularly or in any combination thereof:

## Claims

1. A fluid monitoring system for a transportation tank, the system comprising:
at least one tank sensor to take measurements indicative of the volume of fluid in the tank; and
means to determine at least one of a location of the tank and the time at the location.

2. A fluid monitoring system as claimed in claim 1, further comprising a control unit arranged to monitor the tank sensor measurements and at least one of the location and time, and output a tank output data.

3. A fluid monitoring system as claimed in claim 2, further comprising a transmitter means to communicate the tank output data over a communications network to a control centre.

4. A fluid monitoring system as claimed in either of claims 2 or 3, further comprising a tank access means arranged to control access to the tank based on the tank output data.

5. A fluid monitoring system as claimed in any of the preceding claims, wherein the means to determine at least one of a location and time is provided in the form of a GPS receiver.

6. A fluid monitoring system as claimed in any of the preceding claims, further comprising an electronic storage device to record one or more of the tank sensor measurements, location and time.

7. A fluid monitoring system as claimed in any of the preceding claims, further comprising a temperature compensation means arranged to adjust the tank sensor measurements in response to a temperature measured inside the tank.

8. A method for monitoring fluids in a transportation tank, the method comprising the steps of:
taking measurements indicative of the volume of fluid in the tank; and
measuring at least one of a location of the tank and time at the location.

9. A method for monitoring fluids as claimed in claim 8, the method further comprising communicating the measurements indicative of the fluid volume and the at least one of a tank location and time to a remote centre over a communications network.

10. A method for monitoring fluids as claimed in either of claims 8 or 9, further comprising controlling access to the tank based on at least one of the tank sensor measurements, location and/or time.

11. A fluid monitoring system for a transportation tank, the system comprising:
at least one tank sensor to take measurements indicative of the volume of fluid in the tank; and
transmitter means to communicate the measurements to a control centre over a communications network.

12. A method for monitoring fluids in a transport tank, the method comprising the steps of:
taking measurements indicative of the volume of fluid in the tank; and
communicating the measurements over a communications network to a control centre.

13. An apparatus for controlling access to tank valves in a transportation tank, the apparatus comprising:
a memory arranged to store data indicative of allowable delivery routes and/or destinations;
means to measure at least one of a location of the tank and the time at the location; and
control means to control access to the tank valves based on the at least one tank location and time and the data indicative of allowable delivery routes and/or destinations.

14. A method for controlling access to tank valves in a transportation tank, the method comprising the steps of:
taking measurements indicative of at least one of a location of the tank and the time at the location;
comparing the at least one of the tank location and the time with an allowable delivery route and/or destination; and
controlling access to the tank valves based on the comparison.
